# EUROPEAN PATENT APPLICATION

(11) **EP 1 357 711 A1**
(43) Date of publication of application: **29.10.2003**
(21) Application number: 02291056.6
(22) Date of filing: 25.04.2002
(51) Int. Cl.: H04L 12/56

(54) **Method for managing communication services in a communications network, network element and service agreements management centre for its implementation**

(71) Applicant: ALCATEL, 75008 Paris (FR)
(72) Inventor: Massimo, Canali, 20059 Vimercate (Milano) (IT); Molgora, Paolo, 20090 Settala (Milano) (IT)
(74) Representative: Lamoureux, Bernard

(57) **Abstract**

In a communications transport network (ITN) of the type comprising a plurality of network elements (NE), at least one service agreements management centre (PS) and a plurality of service agreements enforcement points (PC) associated to network elements (NE) of the network (ITN) are provided; the points (PC) are in communication with the centre (PS) according to a certain protocol, and this protocol provides for messages for sending a service start request from a point to a centre, messages for sending a service stop request from a point to a centre, messages for sending a service start decision from a centre to a point, and messages for sending a service stop decision from a centre to a point; when a time constrained service start is requested by a point (PC) to the centre (PS), the centre (PS) arranges means for monitoring the time constraint and when the time constraint is no longer complied with the centre (PS) decides a time constrained service stop and instructs the point (PC) accordingly.

## Description

The present invention relates to a method for managing communication services in a communications transport network according to the preamble of claim 1, and to a network element and a service agreements management centre respectively according to the preamble of claims 7 and 9.

Traditional communications transport networks provide for rigid communication services. The so-called "intelligent transport networks" will provide for flexible communication services such as "scheduled time services" and "bandwidth on demand".

Additionally, in these new networks the clients will be directly able to provision its services while in the traditional networks the provisioning of services is done in a centralized way by a network management application. To this respect, the International Telecommunication Union [ITU] has recently issued a recommendation on "Requirements for Automatic Switched Transport Networks (ASTN)" referenced as ITU-T G.807.

Nowadays the communications transport networks are more and more realized through optical fibres; this trend will increase in the future. This also appears from the standardization activities relating to optical networks, for example those carried out by ITU, more and more devoted to the so called Optical Transport Network [OTN].

An Intelligent Optical Transport Network [ION] may be managed, from an administrative point of view, by a policy management application; the policy management application comprises a Policy Decision Point [PDP] process where decisions are taken and Policy Enforcement Point [PEP] processes where decisions are enforced on the network; such a policy architecture is described in document RFC 2753 of the Internet Engineering Task Force [IETF] entitled "A Framework for Policy-based Admission Control"; these processes may communicate according to COPS protocol as described in document RFC 2748 of the Internet Engineering Task Force [IETF] entitled "The COPS (Common Open Policy Service) Protocol".

All the above cited recommendations and documents are incorporated herewith by reference.

In order to be able to use communication transport services, a service user needs a Service Level Agreement [SLA] with a service provider; the agreement specifies all the agreed service parameters; in the future, even a communication transport service could have supplying time constraints; for example, a user could have a need for a certain communication transport service from a certain date to another certain date or a user could have a need for a certain communication transport service every day from a certain time to another certain time; if such a service is agreed between the user and the provider, it will have supplying time constraints.

It is the interest of the service provider to ensure that the user uses the agreed service only within the agreed time constraints.

In a network where the user is directly able to provision its services upon authorisation by a policy server, the complete and safe management of time constrained services is a unresolved problem at the moment.

It is the object of the present invention to contribute to the solution of the aforementioned problem.

This object is substantially achieved by the method for managing communication services in a communications transport network having the functionalities set out in independent claim 1.

The basic idea underlying the present method is to entrust the task of monitoring the time constraint to the entity responsible for policy management.

Further advantageous functionalities of the present method are set out in the dependent claims.

According to further aspects, the present invention relates also to a network element and to a service agreements management centre for implementation of the present method and having respectively the features set out in independent claims 7 and 9; further advantageous features of the element and of the centre are set out in the respective dependent claims.

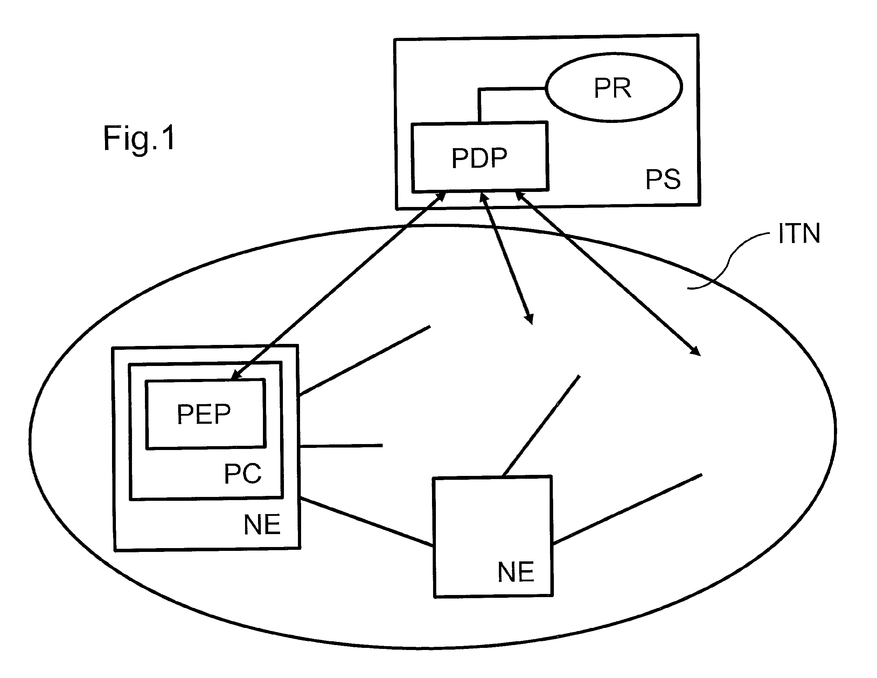

The invention will become more apparent from the following description to be considered in conjunction with the accompanied drawing wherein Fig.1 shows a block diagram of an intelligent transport network ITN provided with a policy server PS; the present invention may be used, for example, in network ITN.

Network ITN comprises a plurality of network elements NE; for simplicity, only two network elements NE are shown in Fig.1 and only for one of them some internal details are shown; the physical connections of the network elements are shown only schematically.

Network ITN may be, for example, an Intelligent Optical transport Network [ION].

Network ITN is managed from an administrative point of view by a policy management application. To this purpose, network ITN comprises a policy server PS and some network elements NE of network ITN comprises a policy client PC. Policy server PS is connected to and in communication with policy clients PC. In the example of Fig.1, such communication takes place according to COPS protocol.

Policy server PS is the entity of network ITN who has the task of managing the service level agreements [SLA] of the users of network ITN. To this purpose, policy server PS comprises a policy decision point application PDP which is, for example, basically implemented as a software process and a policy repository PR for storing at least information relating to service level agreements.

Policy clients PC are the entities of network ITN who have the task of enforcing service level agreements [SLA], i.e. to ensure that a user may obtain and use a service only in accordance with his service level agreement. To this purpose, policy client PC comprises a policy enforcement point application PEP which is, for example, basically implemented as a software process.

For the sake of precision, policy communication takes place between policy decision point application PDP and policy enforcement points application PEP through COPS protocol.

Policy management takes place within network ITN through an exchange of messages between applications PEP and application PDP; according to a simplified description of the policy management activity, an application PEP sends a request message to application PDP and application PDP replies to that application PEP with a decision message; requests may be for the authorisation to start a service or to stop a service; accordingly decisions may be authorisations to start a service or to stop a service.

The method for managing communication services in a communications transport network according to the present invention is able to manage also communication services having supplying time constraints.

According to the present invention, when a time constrained service start is requested by a client PC to server PS, server PS arranges means for monitoring the time constraint and when the time constraint is no longer complied with server PS decides a time constrained service stop and instructs client PC accordingly. When client PC receives the decision of server PS, it will take, either directly or indirectly, all the steps in order to actually stop the service, such as removing connections; the other components of network element NE of client PC will contribute to these steps.

A simple and effective way for realizing the monitoring means is through a timer that could be a software timer or a hardware timer; in this case, server PS sets the timer to a time interval depending on the time constraint; in the example of Fig.1, this activity is done by application PDP; in some cases more than one timer may be used: for example, when a service has a number of time constraints.

According to a simple and effective embodiment, the timer itself signals, for example to other software processes of server PS, when the time interval has elapsed.

The monitoring means may comprise one or more software processes; one or more of these processes may be a timer; one of these processes may have the task to poll the timer processes.

In the specific embodiment of Fig.1, which has an immediate practical interest, the network is an Intelligent Optical transport Network [ION], the protocol is a Common Open Policy Service protocol [COPS], the service agreements management centre PS is a policy server of network ITN comprising a Policy Decision Point [PDP], and the service agreements enforcement points PC are policy clients of network ITN comprising Policy Enforcement Points [PEP].

In order to easily implement the basic idea of the present invention in the practical situation of Fig.1, without any change to existing telecommunication standards, and using COPS protocol, when a time constraint is no longer complied with server PS may instruct client PC by means of an unsolicited COPS decision message.

In order to implement the method according to the present invention, both the network elements and the service agreements management centre have to be appropriately designed and realized.

Network element NE according to the present invention, comprises a service agreements enforcement point, such as for example policy client PC, adapted to communicate with a service agreements management centre, such as for example policy server PS, of network ITN according to a protocol, such as for example the COPS protocol.

It comprises further :
a) means for sending a time constrained service start request to the centre, and
b) means for receiving and enforcing a time constrained service stop decision from the centre.
   Such a network element may be further adapted for the implementation of the various functionalities of the method according to the present invention.
   The service agreements management centre according to the present invention, such as for example policy server PS, comprises:
c) means for receiving a time constrained service start request from a point,
d) means for monitoring the time constraint, and
e) means for sending a time constrained service stop decision to that point when the time constraint is no longer complied with.

Such a service agreement management centre may be further adapted for the implementation of the various functionalities of the method according to the present invention.

As already explained the method and the apparatuses according to the present invention may be implemented partly or entirely in software.

Therefore, a first further aspect of the present invention consists in a processor program product comprising program code portions adapted for the implementation of the method according to the present invention when executed by a processor.

A second further aspect of the present invention consists in memory means storing a processor program product comprising program code portions adapted for the implementation of the method according to the present invention when executed by a processor.

## Claims

1. Method for managing communication services in a communications transport network (ITN), said communication services comprising services having supplying time constraints, said network being of the type comprising a plurality of network elements (NE), at least one service agreements management centre (PS) and a plurality of service agreements enforcement points (PC) associated to network elements (NE) of the network (ITN), said points (PC) being in communication with said centre (PS) according to a protocol, said protocol providing for messages for:
- sending a service start request from a point to a centre,
- sending a service stop request from a point to a centre,
- sending a service start decision from a centre to a point,
- sending a service stop decision from a centre to a point;
**characterized in that**, when a time constrained service start is requested by a point (PC) to the centre (PS), the centre (PS) arranges means for monitoring the time constraint and when the time constraint is no longer complied with the centre (PS) decides a time constrained service stop and instructs said point (PC) accordingly.

2. Method according to claim 1, wherein the monitoring means comprises a timer and wherein the centre (PS) sets the timer to a time interval depending on the time constraint.

3. Method according to claim 2, wherein the timer signals when the time interval has elapsed.

4. Method according to any of the preceding claims, wherein the monitoring means comprises at least one software process.

5. Method according to any of the preceding claims, wherein the network is an Intelligent Optical transport Network [ION], wherein the protocol is a Common Open Policy Service protocol [COPS], wherein the centre (PS) is a policy server of the network (ITN) comprising a Policy Decision Point [PDP], wherein the points (PC) are policy clients of the network (ITN) comprising Policy Enforcement Points [PEP].

6. Method according to claim 5, wherein when the time constraint is no longer complied with the centre (PS) instructs the point (PC) by means of an unsolicited COPS decision message.

7. Network element (NE) for a communications transport network (ITN), comprising a service agreements enforcement point (PC) adapted to communicate with a service agreements management centre (PS) of the network (ITN) according to a protocol, said protocol providing for messages for:
- sending a service start request from the point to the centre,
- sending a service stop request from the point to the centre,
- sending a service start decision from the centre to the point,
- sending a service stop decision from the centre to the point;
**characterized by** the fact of comprising:
a) means for sending a time constrained service start request to the centre (PS), and
b) means for receiving and enforcing a time constrained service stop decision from the centre (PS).

8. Network element (NE) according to claim 7, **characterized by** being adapted for the implementation of the method according to any of claims from 1 to 6.

9. Service agreements management centre (PS) for a communications transport network (ITN), said network (ITN) being of the type comprising a plurality of network elements (NE) and a plurality of service agreements enforcement points (PC) associated to network elements (NE) of the network (ITN), the centre (PS) being adapted to communicate with the points (PC) of the network (ITN) according to a protocol, said protocol providing for messages for :
- sending a service start request from a point to a centre,
- sending a service stop request from a point to a centre,
- sending a service start decision from a centre to a point,
- sending a service stop decision from a centre to a point;
**characterized by** the fact of comprising:
c) means for receiving a time constrained service start request from a point (PC),
d) means for monitoring the time constraint, and
e) means for sending a time constrained service stop decision to said point (PC) when the time constraint is no longer complied with.

10. Service agreement management centre (PS) according to claim 9, **characterized by** being adapted for the implementation of the method according to any of claims from 1 to 6.

11. Processor program product comprising program code portions adapted for the implementation of the method according to any of claims from 1 to 6 when executed by a processor.

12. Memory means storing a processor program product comprising program code portions adapted for the implementation of the method according to any of claims from 1 to 6 when executed by a processor.
